# EUROPÄISCHE PATENTANMELDUNG

(11) **EP 4 050 439 A1**
(43) Veröffentlichungstag der Anmeldung: **31.08.2022**
(21) Anmeldenummer: 21158881.9
(22) Anmeldetag: 24.02.2021
(51) Int. Cl.: G05B 19/409

(54) **VORRICHTUNG ZUR STEUERUNG UND/ODER ÜBERWACHUNG EINES TECHNISCHEN PROZESSES**

(71) Anmelder: Siemens Aktiengesellschaft, 80333 München (DE)
(72) Erfinder: Tacke, Dominik, 90562 Heroldsberg (DE); Villnow, Michael, 90765 Fürth (DE)

(57) **Zusammenfassung**

Die Erfindung gibt eine Vorrichtung (1) zur Steuerung und/oder Überwachung eines technischen Prozesses (6) an, aufweisend:
- eine Bedienfläche (2), wobei die Bedienfläche (2) eine aktive RFID-Leseeinrichtung (3) aufweist, wobei die RFID-Leseeinrichtung (3) ausgebildet ist, Daten (4) von je mindestens einem passiven RFID-Tag (5) zu lesen, wobei die Daten (4) mindestens einen Befehl (8) codieren, wobei der mindestens eine Befehl (8) von den Daten (4) abhängig ist, wobei der mindestens einen Befehl (8) von einem Status (7) des technischen Prozesses (6) als die Daten (4) gelesen wurden, abhängig ist, wobei der mindestens eine Befehl (5) herangezogen wird, um den technischen Prozess (6) zu steuern und/oder zu überwachen.

Außerdem gibt die Erfindung ein zugehöriges Verfahren an.

## Beschreibung

### HINTERGRUND DER ERFINDUNG

### Gebiet der Erfindung

Die Erfindung gibt eine Vorrichtung zur Steuerung und/oder Überwachung eines technischen Prozesses an. Außerdem gibt die Erfindung ein zugehöriges Verfahren an.

### Beschreibung des Stands der Technik

In Produktion und der Automatisierung kommt es zunehmend zur Interaktion zwischen Menschen und Maschinen. Dieses Zusammenspiel wird immer komplexer. Sei es zum Starten und Stoppen von Fertigungsschritten aber auch zum Anfordern von Material bzw. Logistikleistungen, z.B. durch führerlose Flurförderfahrzeugen (AGV).

Auch die zunehmende Digitalisierung und vor allem die Darstellung der physikalischen Welt im digitalen Zwilling erfordern eine echtzeitfähige Rückmeldung von Bearbeitungsschritten und Fehlern/Störungen an darüberliegende IT-Systeme (ERP = Enterprise Resource Planning).

Zudem ist ein wesentlicher Bestandteil der digitalisierten Fertigung von morgen die Herstellung der Losgröße 1. Das heißt, dass Fertigungsprozesse dynamisch angepasst werden müssen. Damit ändert sich ebenfalls die Interaktion zwischen Menschen und Maschine mit der jeweiligen Änderung des Fertigungsprozesses auf das entsprechende Erzeugnis oder Produkt.

Üblicherweise werden dem Menschen HMIs (human machine interfaces) zur Verfügung gestellt. Diese reichen von einem einfachen Knopf oder "Buttons", über komplexere Schaltpulte bis hin zu Panel-PCs mit einer eigenen grafischen Oberfläche und Touchbedienung.

Vor allem im Bereich der Knöpfe und Schaltpulte fehlt es oft an der Vernetzung zu darüberliegenden IT-Systemen (den ERP = Enterprise Resource Planning Systems). Durch die mangelnde Vernetzung von Buttons oder Schaltpulte ist eine Prozessüberwachung in Echtzeit meist begrenzt oder nicht möglich.

Zudem sind solche Systeme meist nicht flexibel an den sich ändernden Fertigungsprozess anpassbar.

Darüber hinaus sind bei sich ändernden Interaktionen von Menschen und Maschine komplexe Schaltpulte notwendig, welche mit einem erheblichen Entwicklungsaufwand einhergehen. Oft sind HMIs spezialisiert auf den jeweiligen Arbeitsbereich, wodurch eine Wieder- und Weiterverwendung an anderer Stelle im Prozess meist nur schwer zu realisieren ist.

Darüber hinaus sind grafische HMIs, beispielsweise Touchpanels sehr teuer.

Die Aufgabe der Erfindung besteht darin, eine Lösung für eine verbesserte Interaktion zwischen Menschen und Maschinen bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Vorrichtung zur Steuerung und/oder Überwachung eines technischen Prozesses.

Die Vorrichtung weist eine Bedienfläche auf, wobei die Bedienfläche eine aktive RFID-Leseeinrichtung aufweist, wobei die RFID-Leseeinrichtung ausgebildet ist, Daten von je mindestens einem passiven RFID-Tag zu lesen, wobei die Daten mindestens einen Befehl codieren, wobei der mindestens eine Befehl von den Daten abhängig ist, wobei der mindestens einen Befehl von einem Status des technischen Prozesses als die Daten gelesen wurden, abhängig ist, wobei der mindestens eine Befehl herangezogen wird, um den technischen Prozess zu steuern und/oder zu überwachen.

Ein Aspekt der Erfindung besteht darin, den Stand der Technik durch eine Bedienfläche, insbesondere Schaltfläche (vergleichbar mit einem Knopf) mit einer integrierten, aktiven RFID-Leseeinrichtung, auch als RFID-Reader oder als RFID-Button bezeichenbar, zu verbessern. Die Vorrichtung ermöglicht eine kontextabhängige Bedienung, das heißt eine Bedienung, welche von einem Status des technischen Prozesses als die Daten gelesen wurden, abhängig ist. Die kontextabhängige Bedienung ermöglicht eine an die jeweilige Situation angepasste Steuerung und/oder Überwachung des technischen Prozesses, insbesondere eine an die jeweilige Situation angepasste Bedienung einer Maschine.

Das bedeutet, dass sich der Befehl, insbesondere eine Funktion der Betätigung der RFID-Leseeinrichtung mit stets dem gleichen passiven RFID-Tag in Abhängigkeit des jeweiligen Kontexts des technischen Prozesses, insbesondere des Fertigungsprozesses, ändert. Bevorzugt kann zu Beginn des Fertigungsprozesses eine Anforderung von Betriebsmitteln ausgelöst werden, während zum Ende des Fertigungsprozesses durch denselben RFID-Tag und derselben RFID-Leseeinrichtung eine Anforderung eines Flurförderfahrzeuges ausgelöst wird. Das hat den Vorteil, dass ein RFID-Tag für verschiedene Befehlen verwendet werden kann und dass auch immer nur die Befehle zur Verfügung stehen, welche abhängig vom Status des technischen Prozesses relevant sind.

Die RFID-Leseeinrichtung kann durch einen Menschen, insbesondere durch Handschuhe, insbesondere Arbeitshandschuhe, mit integrierten, passiven RFID-Tags, bedient werden.

Der passive RFID-Tag kann vorzugsweise in den Fingerspitzen des Handschuhes integriert sein, kann aber auch an anderen Stellen integriert sein, insbesondere den Handballen oder den Fingerknöchel.

Dabei kann ein einzelner RFID-Tag integriert sein, vorzugsweise aber mehrere RFID-Tags. Mehrere RFID-Tags können unterschiedliche Daten übertragen und unterschiedliche Befehle kodieren.

In einer Weiterbildung der Erfindung ist die RFID-Leseeinrichtung als NFC-Leseeinrichtung und der passive RFID-Tag als passiver NFC-Tag ausgebildet.

In einer Weiterbildung der Erfindung ist der technische Prozess als:
- ein Produktionsprozess,
- ein Fertigungsprozess,
- ein Automatisierungsprozess,
- ein Logistikprozess,
- ein Prozess in einem Energiekraftwerk,
- ein Datenerhebungsprozess einer technischen Anlage oder
- ein Steuerungsprozess
ausgebildet ist.

Das hat den Vorteil, dass die Vorrichtung für verschiedene technische Prozesse eingesetzt werden kann.

In einer weiteren Weiterbildung der Erfindung ist die Bedienfläche als:
- Schaltfläche und/oder
- Mensch-Maschine-Schnittstelle
ausgebildet.

Das hat den Vorteil, dass die Bedienfläche auf verschiedene Weisen in die Vorrichtung integriert werden kann.

In einer weiteren Weiterbildung der Erfindung ist der mindestens einen Befehl von:
- externen Umständen des technischen Prozesses als die Daten gelesen wurden und/oder
- internen Umständen des technischen Prozesses als die Daten gelesen wurden und/oder
- dem Zeitpunkt, zu welchem die Daten gelesen wurden, abhängig.

Dies hat den Vorteil einer kontextabhängigen Bedienung, welche eine an die jeweilige Situation angepasste Steuerung und/oder Überwachung des technischen Prozesses, insbesondere eine an die jeweilige Situation angepasste Bedienung einer Maschine, ermöglicht. Das hat den Vorteil, dass ein RFID-Tag für verschiedene Befehlen verwendet werden kann und dass auch immer nur die Befehle zur Verfügung stehen, welche abhängig vom Status des technischen Prozesses relevant sind.

In einer weiteren Weiterbildung der Erfindung ist der mindestens eine Befehl als:
- ein Anfordern von Betriebsmitteln,
- ein Starten des technischen Prozesses,
- ein Beenden des technischen Prozesses,
- ein Erfassen von Daten des technischen Prozesses,
- ein Anfordern von Materialien,
- ein Anfordern von Prozessdaten,
- ein Anfordern einer Arbeitskraft,
- ein Einleiten eines Messvorgangs,
- ein Einleiten eines Zwischenschrittes und/oder
- ein Senden einer Warnmeldung
ausgebildet.

Das hat den Vorteil, dass die Vorrichtung zur Auslösung unterschiedlicher Befehle verwendet werden kann.

In einer weiteren Weiterbildung der Erfindung ist der mindestens eine Befehl von einer Abfolge der Daten abhängig. Das hat den Vorteil, dass durch ein einzelner RFID-Tag eine Abfolge von Daten and die RFID-Leseeinrichtung übertragen kann, insbesondere durch ein mehrfaches Betätigen und dass dadurch unterschiedliche Befehle ausgelöst werden können.

In einer weiteren Weiterbildung der Erfindung ist die RFID-Leseeinrichtung ausgebildet Daten von je mindestens zwei passiven RFID-Tags zu lesen, wobei der mindestens eine Befehl von einer Abfolge der Daten der mindestens zwei passiven RFID-Tags abhängig ist. Das hat den Vorteil, dass durch die mindestens zwei RFID-Tags eine Abfolge von Daten an die RFID-Leseeinrichtung übertragen werden kann, insbesondere durch ein mehrfaches Betätigen und dass dadurch unterschiedliche Befehle ausgelöst werden können.

Durch die Kombination von mehreren aufeinanderfolgenden Betätigungen mit mehreren RFID-Tags lassen sich eine Vielzahl von Eingabemöglichkeiten realisieren. So kann durch zwei aufeinanderfolgende Betätigungen der RFID-Leseeinrichtung, insbesondere des RFID-Buttons, eine Kombination aus zwei passiven RFID-Tags erzeugt werden. Somit sind bei Verwendung von einem Paar Arbeitshandschuhen mit zehn integrierten passiven RFID-Tags in den Fingerspitzen insgesamt 10 x 10 = 100 Eingabemöglichkeiten vorhanden. Darüber hinaus ist auch Mehrfach-Tippen denkbar, um die Anzahl möglicher Eingaben zu erhöhen.

In einer weiteren Weiterbildung der Erfindung ist der mindestens eine Befehl von dem mindestens einem passiven RFID-Tag abhängig. Das hat den Vorteil, dass der RFID-Tag bestimmt, welcher Befehl ausgelöst wird.

In einer weiteren Weiterbildung der Erfindung sind die Daten von dem mindestens einem passiven RFID-Tag abhängig. Das hat den Vorteil, dass der RFID-Tag bestimmt, welche daten übertragen werden, wobei die Daten wiederum bestimmen welcher Befehl ausgelöst wird.

Durch die Verwendung von mehreren integrierten passiven RFID-Tags, können unterschiedliche Befehle, insbesondere Aktionen, mit nur einer RFID-Leseeinrichtung, insbesondere mit nur einem RFID-Button, ausgeführt werden. Beispielsweise betätigt der Zeigefinger der rechten Hand eine Bestätigung, der Mittelfinger der rechten Hand eine Störungsmeldung, der Zeigefinger der linken Hand eine Unterstützungsanfrage bei Montage, oder der Mittelfinger der linken Hand eine Materialnachbestellung von Hilfsmitteln.

In einer weiteren Weiterbildung der Erfindung weisen die Daten Identifikationsdaten mindestens eines passiven RFID-Tags auf. Das hat den Vorteil, dass der verwendete RFID-Tag identifiziert werden kann. So kann insbesondere die Person, welche die RFID-Leseeinrichtung betätigt hat, über den getragenen Handschuh identifiziert werden.

In einer weiteren Weiterbildung der Erfindung ist die Bedienfläche kabelgebunden oder kabellos, insbesondere über WiFi oder BLE, in ein IT-Netz eingebunden.

Der die RFID-Leseeinrichtung, insbesondere der RFID-Button, kann sowohl kabelgebunden als auch kabellos (WiFi, BLE oder vergleichbar) in das IT-Netz eingebracht werden. Dies ermöglicht neben der flexiblen, zentralen Konfiguration der RFID-Leseeinrichtung auch die Rückmeldung der Bedienung und somit des Zustands des technischen Prozesses in Echtzeit. Bei einer kabelgebundenen Anbindung der RFID-Leseeinrichtung empfiehlt sich zusätzlich die Versorgung mittels PoE (Power over Ethernet) des RFID-Buttons.

In einer weiteren Weiterbildung der Erfindung ist die die Bedienfläche in Form:
- eines haptischen Knopfs oder
- einer digitalen Darstellung auf der Bedienfläche ausgebildet.

Dies hat den Vorteil, dass die RFID-Leseeinrichtung in unterschiedlichen Arten in die Vorrichtung integriert werden kann.

Die Erfindung umfasst außerdem ein Verfahren zur Steuerung und/oder Überwachung eines technischen Prozesses mit den Schritten:
- Lesen von Daten von je mindestens einem passiven RFID-Tag durch aktive RFID-Leseeinrichtung, wobei die RFID-Leseeinrichtung von einer Bedienfläche aufgewiesen wird,
   wobei die Daten mindestens einen Befehl codieren,
   wobei der mindestens eine Befehl von den Daten abhängig ist,
   wobei der mindestens einen Befehl von einem Status des technischen Prozesses als die Daten gelesen wurden, abhängig ist,
- Heranziehen des mindestens einen Befehls um den technischen Prozess zu steuern und/oder zu überwachen.

In einer Weiterbildung der Erfindung ist das erfindungsgemäße Verfahren zum Betrieb einer erfindungsgemäßen Vorrichtung ausgebildet.

Die Erfindung bietet die folgenden Vorteile. Im Gegensatz zu aufwendigen Schaltpulten oder grafischen Bedienpanels ist eine Schaltfläche mit einer RFID-Leseeinrichtung kostengünstig herzustellen.

Außerdem ist die RFID-Leseeinrichtung sehr langlebig, da sie über keine mechanischen beweglichen Teile verfügt. Es wird keine Taste gedrückt, sondern die Annäherung eines passiven RFID-Tags auf wenige Millimeter löst den "Tastendruck" (Übertragung der Daten) aus.

Außerdem müssen Mitarbeiter in den meisten Fällen in einer Fertigung (z.B. Monteure) ohnehin Schutzkleidung, wie beispielsweise Handschuhe, tragen. Die Bedienung eines Touchpanels ist mit Handschuhen schwierig und führt in der Praxis oft zu Komplikationen. Zudem müssen für die Bedienung von Touchpanels resistive Displays verwendet werden, welche teuer und funktional eingeschränkt sind.
Zudem kann die Funktionalität der RFID-Leseeinrichtung über den Produktlebenszyklus oder einzelne Prozessschritte dynamisch angepasst werden, indem einzelne RFID-IDs der passiver RFID-Tags dynamisch mit anderen Funktionen belegt werden können. Diese dynamische Anpassung ist bei statischen Schaltpulten nicht möglich. Touchpanels können zwar in ihrer Eingabemaske angepasst werden, jedoch bedarf es aufwendiger Integrations- und Systemtests

Durch eine geschlossene Bauweise der RFID-Leseeinrichtung ohne bewegliche Teile kann das Gehäuse außerdem robust aufgebaut werden. Durch eine Kapselung sind neben einer Verwendung in explosionsgefährdeten Bereichen (ATEX, Prozessindustrie, Kraftwerktechnik), der Verwendung in hygienisch relevanten Bereichen (z.B. Lebensmittelindustrie) auch die Verwendung in Bereichen mit hoher Schutzanforderung (z.B. IP68k) denkbar.

Es ist zudem keine Energieversorgung der passiven RFID-Tags im Handschuh notwendig. Die notwendige Energie, um die RFID-Tags auszulesen, wird durch die Reader-Antenne der RFID-Leseeinrichtung bereitgestellt.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung einer Vorrichtung 1 zur Steuerung und/oder Überwachung eines technischen Prozesses 6 und
- Fig. 2: ein Verfahren zur Steuerung und/oder Überwachung eines technischen Prozesses 6.

### DETAILLIERTE BESCHREIBUNG DER ERFINDUNG

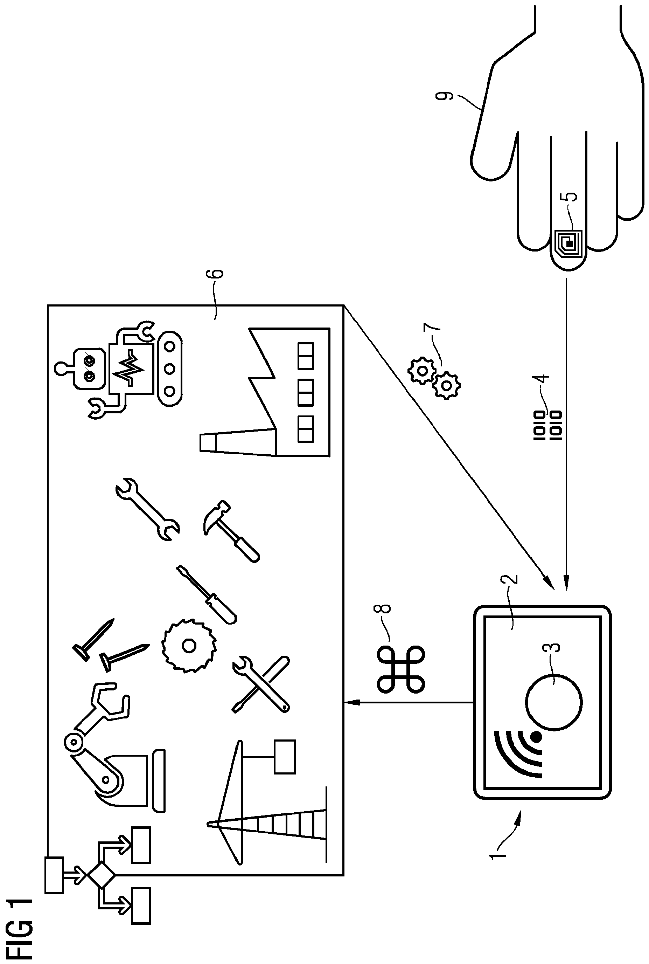

Fig. 1 zeigt eine Vorrichtung 1 zur Steuerung und/oder Überwachung eines technischen Prozesses 6 aufweisend eine Bedienfläche 2.

Die Bedienfläche 2 weist eine aktive RFID-Leseeinrichtung 3 auf. Die RFID-Leseeinrichtung 3 ist ausgebildet, Daten 4 von je mindestens einem passiven RFID-Tag 5 zu lesen.

Die Daten 4 codieren mindestens einen Befehl 8, wobei der mindestens eine Befehl 8 von den Daten 4 abhängig ist und wobei der mindestens einen Befehl 8 außerdem von einem Status 7 des technischen Prozesses 6 als die Daten 4 gelesen wurden, abhängig ist.

Der mindestens eine Befehl 8 wird herangezogen, um den technischen Prozess 6 zu steuern und/oder zu überwachen.

Die Vorrichtung 1 ermöglicht eine kontextabhängige Bedienung, das heißt eine Bedienung, welche von einem Status 7 des technischen Prozesses 6 als die Daten 4 gelesen wurden, abhängig ist. Die kontextabhängige Bedienung ermöglicht eine an die jeweilige Situation und durch den Status 7 definierte angepasste Steuerung und/oder Überwachung des technischen Prozesses 6, insbesondere eine an die jeweilige Situation und durch den Status 7 definierte angepasste Bedienung einer Maschine.

Das bedeutet, dass sich der Befehl 8, insbesondere eine Funktion der Betätigung der RFID-Leseeinrichtung 3 mit stets dem gleichen passiven RFID-Tag 5 in Abhängigkeit des jeweiligen Kontexts und durch den Status 7 des technischen Prozesses 6, insbesondere des Fertigungsprozesses, ändert. Bevorzugt kann zu Beginn des Fertigungsprozesses eine Anforderung von Betriebsmitteln ausgelöst werden, während zum Ende des Fertigungsprozesses durch denselben RFID-Tag 5 und derselben RFID-Leseeinrichtung 3 eine Anforderung eines Flurförderfahrzeuges ausgelöst wird. Das hat den Vorteil, dass ein RFID-Tag 5 für verschiedene Befehlen 8 verwendet werden kann und dass auch immer nur die Befehle 8 zur Verfügung stehen, welche abhängig vom Status 7 des technischen Prozesses 6 relevant sind.

Die RFID-Leseeinrichtung 3 kann durch einen Menschen, insbesondere durch Handschuhe, insbesondere Arbeitshandschuhe, mit integrierten, passiven RFID-Tags 5, bedient werden.

Der passive RFID-Tag 5 kann vorzugsweise in den Fingerspitzen des Handschuhes 9 integriert sein, kann aber auch an anderen Stellen integriert sein, insbesondere den Handballen oder den Fingerknöchel.

Dabei kann ein einzelner RFID-Tag 5 integriert sein, vorzugsweise aber mehrere RFID-Tags 5. Mehrere RFID-Tags 5 können unterschiedliche Daten 4 übertragen und unterschiedliche Befehle 8 kodieren.

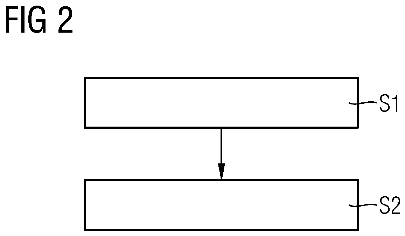

Fig. 2 zeigt ein Verfahren zur Steuerung und/oder Überwachung eines technischen Prozesses 6 mit den Schritten:
- Schritt S1: Lesen von Daten 4 von je mindestens einem passiven RFID-Tag 5 durch aktive RFID-Leseeinrichtung 3, wobei die RFID-Leseeinrichtung 3 von einer Bedienfläche 2 aufgewiesen wird,
   wobei die Daten 4 mindestens einen Befehl 8 codieren, wobei der mindestens eine Befehl 8 von den Daten 4 abhängig ist,
   wobei der mindestens einen Befehl 8 von einem Status 7 des technischen Prozesses 6 als die Daten 4 gelesen wurden, abhängig ist,
- Schritt S2: Heranziehen des mindestens einen Befehls 8 um den technischen Prozess 6 zu steuern und/oder zu überwachen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Vorrichtung (1) zur Steuerung und/oder Überwachung eines technischen Prozesses (6),
aufweisend:
- eine Bedienfläche (2), wobei die Bedienfläche (2) eine aktive RFID-Leseeinrichtung (3) aufweist,
wobei die RFID-Leseeinrichtung (3) ausgebildet ist, Daten (4) von je mindestens einem passiven RFID-Tag (5) zu lesen,
wobei die Daten (4) mindestens einen Befehl (8) codieren, wobei der mindestens eine Befehl (8) von den Daten (4) abhängig ist,
wobei der mindestens einen Befehl (8) von einem Status (7) des technischen Prozesses (6) als die Daten (4) gelesen wurden, abhängig ist,
wobei der mindestens eine Befehl (5) herangezogen wird, um den technischen Prozess (6) zu steuern und/oder zu überwachen.

2. Vorrichtung nach Anspruch 1,
wobei der technische Prozess (6) als:
- ein Produktionsprozess,
- ein Fertigungsprozess,
- ein Automatisierungsprozess,
- ein Logistikprozess,
- ein Prozess in einem Energiekraftwerk,
- ein Datenerhebungsprozess einer technischen Anlage oder
- ein Steuerungsprozess
ausgebildet ist.

3. Vorrichtung (1) nach einem der vorhergehenden Ansprüche,
wobei die Bedienfläche (2) als:
- Schaltfläche und/oder
- Mensch-Maschine-Schnittstelle und/oder
- Touch-Screen
ausgebildet ist.

4. Vorrichtung (1) nach einem der vorhergehenden Ansprüche,
wobei der mindestens einen Befehl (8) von:
- externen Umständen des technischen Prozesses (6) als die Daten (4) gelesen wurden und/oder
- internen Umständen des technischen Prozesses (6) als die Daten (4) gelesen wurden und/oder
- dem Zeitpunkt, zu welchem die Daten (4) gelesen wurden, abhängig ist.

5. Vorrichtung (1) nach einem der vorhergehenden Ansprüche,
wobei der mindestens eine Befehl (8) als:
- ein Anfordern von Betriebsmitteln,
- ein Starten des technischen Prozesses (6),
- ein Beenden des technischen Prozesses (6),
- ein Erfassen von Prozessdaten des technischen Prozesses (6),
- ein Anfordern von Materialien,
- ein Anfordern von Prozessdaten,
- ein Anfordern einer Arbeitskraft,
- ein Einleiten eines Messvorgangs,
- ein Einleiten eines Zwischenschrittes und/oder
- ein Senden einer Warnmeldung
ausgebildet ist.

6. Vorrichtung (1) nach einem der vorhergehenden Ansprüche,
wobei der mindestens eine Befehl (8) von einer Abfolge der Daten (4) abhängig ist.

7. Vorrichtung (1) nach einem der vorhergehenden Ansprüche,
wobei die RFID-Leseeinrichtung (3) ausgebildet ist Daten (4) von je mindestens zwei passiven RFID-Tags (5) zu lesen,
wobei der mindestens eine Befehl (8) von einer Abfolge der Daten (4) der mindestens zwei passiven RFID-Tags (5) abhängig ist.

8. Vorrichtung (1) nach einem der vorhergehenden Ansprüche,
wobei der mindestens eine Befehl (8) von dem mindestens einem passiven RFID-Tag (5) abhängig ist.

9. Vorrichtung (1) einem der vorhergehenden Ansprüche,
wobei die Daten (4) von dem mindestens einem passiven RFID-Tag (5) abhängig sind.

10. Vorrichtung (1) nach einem der vorhergehenden Ansprüche,
wobei die Daten (4) Identifikationsdaten des mindestens einem passiven RFID-Tags (5) aufweisen.

11. Vorrichtung (1) nach einem der vorhergehenden Ansprüche,
wobei die Bedienfläche (2) kabelgebunden oder kabellos, insbesondere über WiFi oder BLE, in ein IT-Netz eingebunden ist.

12. Vorrichtung (1) nach einem der vorhergehenden Ansprüche,
wobei die Bedienfläche (2) in Form:
- eines haptischen Knopfs oder
- einer digitalen Darstellung auf der Bedienfläche (2) ausgebildet ist.

13. Verfahren zur Steuerung und/oder Überwachung eines technischen Prozesses (6) mit den Schritten:
- Lesen (S1) von Daten (4) von je mindestens einem passiven RFID-Tag (5) durch aktive RFID-Leseeinrichtung (3), wobei die RFID-Leseeinrichtung (3) von einer Bedienfläche (2) aufgewiesen wird,
wobei die Daten (4) mindestens einen Befehl (8) codieren, wobei der mindestens eine Befehl (8) von den Daten (4) abhängig ist,
wobei der mindestens einen Befehl (8) von einem Status (7) des technischen Prozesses (6) als die Daten (4) gelesen wurden, abhängig ist,
- Heranziehen (S2) des mindestens einen Befehls (8) um den technischen Prozess (6) zu steuern und/oder zu überwachen.

14. Verfahren nach Anspruch 13 zum Betrieb einer Vorrichtung (1) nach einem der Ansprüche 1 bis 12.
